# EUROPÄISCHE PATENTSCHRIFT

(11) **EP 1 225 094 B1**
(45) Veröffentlichungstag und Bekanntmachung des Hinweises auf die Patenterteilung: **07.03.2007**
(21) Anmeldenummer: 02000442.0
(22) Anmeldetag: 08.01.2002
(51) Int. Cl.: B60R 5/04

(54) **Abdeckvorrichtung für einen Laderaum eines Kraftfahrzeugs**
Covering device for a loading space of a motor vehicle
Dispositif de couverture pour un espace de chargement de véhicule

(30) Priorität: 18.01.2001 DE 10102627
(43) Veröffentlichungstag der Anmeldung: 24.07.2002
(73) Patentinhaber: BOS GmbH & Co. KG, 73760 Ostfildern (DE)
(72) Erfinder: Ament, Eduard, 82212 Herrsching-Breitbrunn (DE); Krause, Beate, 73635 Rudersberg-Michelau (DE); Walter, Herbert, 73061 Ebersbach (DE); Winkler, Hans-Joachim, 71522 Backnang (DE)
(74) Vertreter: Patentanwälte Ruff, Wilhelm, Beier, Dauster & Partner

(56) Entgegenhaltungen:
- EP-A- 0 565 220
- US-A- 5 727 836

## Beschreibung

Die Erfindung betrifft eine Abdeckvorrichtung für einen Laderaum eines Kraftfahrzeugs mit einem flexiblen Flächengebilde, das auf einer laderaumfest gelagerten Wickelwelle aufroll- oder ausziehbar gehalten ist, wobei der Wickelwelle eine Wickelfederanordnung zum Ausüben einer Aufrollkraft auf das Flächengebilde zugeordnet ist, und wobei an einem vorderen Endbereich des Flächengebildes ein formstabiles Ausziehelement angeordnet ist.

Eine solche Abdeckvorrichtung ist als Laderaumabdeckung für einen Kombi-Personenkraftwagen allgemein bekannt. Die Abdeckvorrichtung weist ein Kassettengehäuse auf, das hinter einer Fondsitzbank fahrzeugfest, d.h. laderaumfest positioniert ist. In dem Kassettengehäuse ist eine Wickelwelle drehbar gelagert, auf der ein flexibles Flächengebilde in Form einer Abdeckplane aufroll- und ausziehbar gehalten ist. Die Wickelwelle ist durch eine Wickelfeder in Aufrollrichtung beaufschlagt, so dass die Abdeckplane nach einem Ausziehen und Einhängen in der Funktionsposition sowie einem erneuten Lösen aus der Funktionsposition automatisch wieder zurückgezogen und aufgerollt wird. Ein vorderer Endbereich des Flächengebildes in Form einer Abdeckplane ist mit einem Ausziehelement in Form eines Konturteiles versehen, das auf gegenüberliegenden Seiten mit Einhängeelementen zur Fixierung in der Abdeckposition in fahrzeugfesten Halterungen versehen ist. In dem Konturteil ist eine Grifföffnung vorgesehen, durch die das Aushängen des Konturteiles von Hand und das manuelle Zurückführen der Abdeckplane in das Kassettengehäuse erzielbar ist. Für das manuelle Zurückführen muss sich die entsprechende Bedienperson in den Laderaum hineinbeugen und die Hand, die das Konturteil ergriffen hat, bis zum Kassettengehäuse hin ausstrecken.

EP0565220A zeigt eine Abdeckvorrichtung gemäß dem Oberbegriff des Anspruchs 1. Aufgabe der Erfindung ist es, eine Abdeckvorrichtung der eingangs genannten Art zu schaffen, die eine vereinfachte Überführung des Flächengebildes aus einer ausgezogenen Funktionsposition in die aufgerollte Ruheposition ermöglicht.

Diese Aufgabe wird durch die Merkmale des Anspruchs 1 gelöst.

Gemäß den Anspruch 1 sind als Führungsanordnung zwei auf gegenüberliegenden Seiten des Flächengebildes im Laderaum etwa horizontal angeordnete Führungsprofile vorgesehen. Dadurch wird das Flächengebilde zu beiden Seiten von den Führungsprofilen flankiert und in diesen geführt.

Der vordere Endbereich des Flächengebildes ist in jedem Führungsprofil durch einen Gleitstein geführt. Der vordere Endbereich kann mit einem sich über die gesamte Breite des Flächengebildes versehenen, formstabilen Konturteil versehen sein, das auch das Ausziehelement im Sinne der Erfindung bildet. Bei einer solchen Ausführung können auf gegenüberliegenden Seiten des Konturteiles Gleitköpfe vorgesehen sein, die als Gleitsteine zur Führung in dem Führungsprofil dienen.

Jedem Gleitstein ist ein zwischen einer Blockierposition und einer Freigabeposition beweglich gelagertes Rastfunktionselement zugeordnet, das durch ein Federelement zur Blockierposition hin federbelastet ist, und an dem die Freigabevorrichtung zur zeitweisen Überführung des Rastfunktionselementes in die Freigabeposition angreift. Dabei kann der Gleitstein selbst das Rastfunktionselement bilden, oder ein entsprechende Rastfunktionselement ist in jedem Gleitstein integriert oder das Rastfunktionselement ist in anderer Art und Weise an den entsprechenden Gleitsteinen gelagert.

In weiterer Ausgestaltung der Erfindung sind die Rastfunktionselemente starr mit einer gemeinsamen Welle verbunden, die in dem Ausziehelement quer zur Ausziehrichtung des Flächengebildes drehbeweglich gelagert ist. In weiterer Ausgestaltung weist die Freigabevorrichtung einen koaxial zu der mit den Rastfunktionselementen verbundenen Welle an dem Ausziehelement schwenkbeweglich gelagerten Betätigungsgriff auf. Durch diese Ausgestaltungen ist durch eine einfache Verschwenkung des Betätigungsgriffes die Blockierung des Flächengebildes in einer zumindest teilweise ausgezogenen Funktionsposition aufhebbar, wodurch das Flächengebilde durch die Wickelfederanordnung automatisch in seine Ruheposition bzw. in die nächste, dazwischenliegende Rastposition überführbar ist. Vorzugsweise erfolg die Blockierung durch die Rastfunktionselemente formschlüssig, indem in den Führungsprofilen korrespondierende Raststellen vorgesehen sind. Die Führungsprofile sind derart auf die Gleitsteine abgestimmt, dass sich eine spielarme Gleitführung für die Gleitsteine ergibt, sobald die Rastfunktionselemente in ihre Freigabeposition überführt sind. Die entsprechenden Raststellen für die Rastfunktionselemente können auch seitlich versetzt zu den Gleitbahnen der Führungsprofile für die Gleitsteine angeordnet sein, so dass die Rastfunktionselemente selbst außerhalb dieser Gleitbahnen verlaufen.

In weiterer Ausgestaltung der Erfindung ist der Betätigungsgriff im Gegensatz zu seiner Lösefunktion auslenkbar und für die entgegengesetzte Auslenkbewegung greift eine Rückstellfeder an dem Betätigungsgriff an, die auf den Betätigungsgriff ein Drehmoment zur Lösefunktion hin ausübt. Falls daher der Betätigungsgriff zur Überführung der Rastfunktionselemente in die Freigabeposition schräg nach unten gedrückt wird und während des Aufrollens des Flächengebildes in dieser schräg nach unten gestellten Position verbleibt, so gewährleistet die entgegengesetzte Auslenkbarkeit eine Freilauffunktion, falls der nach unten gerichtete Betätigungsgriff durch unterhalb der Abdeckebene befindliche Gepäckstücke, an denen der Betätigungsgriff vorbeiläuft, nach oben ausgelenkt wird. Durch diese Freilauffunktion werden trotz des Auftreffens des Betätigungsgriffes auf entsprechende Gepäckstücke oder Transportgegenstände beim Zurücklaufen des Flächengebildes keine Belastungen auf den vorderen Endbereich des Flächengebildes oder auf das Ausziehelement ausgeübt, die die automatische Einziehfunktion des Flächengebildes beeinträchtigen könnten.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt perspektivisch einen Kombi-Personenkraftwagen, in dessen Laderaum eine Ausführungsform einer erfindungsgemäßen Abdeckvorrichtung in ihrer ausgezogenen Funktionsposition angeordnet ist,
- Fig. 2: in vergrößerter, perspektivischer Darstellung einen Ausschnitt der Abdeckvorrichtung in ausgezogenem Funktionszustand,
- Fig. 3: die Abdeckvorrichtung nach Fig. 2, jedoch in einer gelösten Zwischenposition,
- Fig. 4: die Abdeckvorrichtung nach Fig. 3 in anderer perspektivischer Darstellung,
- Fig. 5: die Abdeckvorrichtung nach den Fig. 2 bis 4 in einer teilweise eingefahrenen Zwischenposition,
- Fig. 6: in einer teilweise aufgebrochenen Seitenansicht die Abdeckvorrichtung nach den Fig. 2 bis 5 in der arretierten Funktionsposition,
- Fig. 7: die Abdeckvorrichtung in einer Seitenansicht in der Zwischenposition gemäß Fig. 3,
- Fig. 8: die Abdeckvorrichtung in einer weiteren Zwischenposition entsprechend Fig. 5, und
- Fig. 9 bis 11: eine weitere Ausführungsform einer erfindungsgemäßen Abdeckvorrichtung mit einem Freilauf für einen Betätigungsgriff einer Freigabevorrichtung der Abdeckvorrichtung, wobei die Abdeckvorrichtung in unterschiedlichen Positionen dargestellt ist.

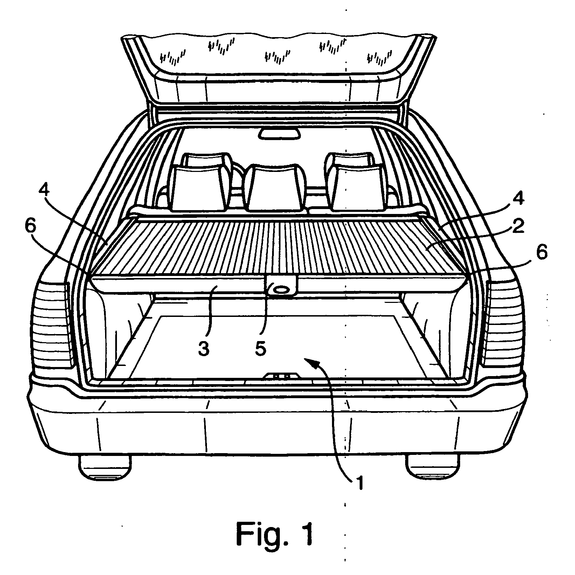

Ein Kraftfahrzeug, vorliegend in Form eines Kombi-Personenkraftwagens, weist gemäß Fig. 1 in einem Heckbereich einen Laderaum 1 auf, der etwa auf Höhe einer Bordkante des Kraftfahrzeugs durch eine Abdeckvorrichtung überdeckbar ist. Die Abdeckvorrichtung weist ein nicht näher bezeichnetes Kassettengehäuse auf, das in grundsätzlich bekannter Weise hinter einer Rückenlehne einer Fondsitzbank horizontal und in Fahrzeugquerrichtung verlaufend fahrzeugfest und laderaumfest positioniert ist. Das Kassettengehäuse ist lösbar in entsprechenden fahrzeugfesten Halterungen befestigt, so dass es entfernt werden kann. In dem Kassettengehäuse ist eine Wickel - welle drehbar gelagert, die in an sich bekannter Weise ein Stirnende eines flexiblen Flächengebildes in Form einer Abdeckplane 2 trägt, die aus dem Kassettengehäuse heraus ausziehbar und für eine horizontale Abdeckung des Laderaumes 1 vorgesehen ist. Die Wickelwelle ist durch eine Wickelfederanordnung beaufschlagt, die in Einzieh- oder Aufrollrichtung des Flächengebildes auf die Wickelwelle wirkt.

Die als Flächengebilde dienende Abdeckplane 2 weist in ihrem vorderen, d.h. aus dem Kassettengehäuse herausragenden Endbereich ein Konturteil 3 auf, das sich über die gesamte Breite des Flächengebildes 2 erstreckt. Das Konturteil 3 ist formstabil gestaltet und in seiner Mitte mit einem schwenkbeweglich gelagerten Betätigungsgriff 5 versehen, der Teil einer nachfolgend näher beschriebenen Freigabevorrichtung ist.

Auf gegenüberliegenden Seiten ist das Konturteil 3, das als Ausziehelement im Sinn der Erfindung dient, in einer Führungsanordnung in Form von jeweils einem Führungsprofil 4 etwa horizontal längs verschiebbar gelagert. Die beiden Führungsschienen 4 sind an gegenüberliegenden Seitenwandungen des Laderaumes 1 fahrzeugfest positioniert und verlaufen etwa auf Höhe der Bordkante, etwa horizontal in Fahrzeuglängsrichtung nach hinten.

Die Führung des Konturteiles 3, d.h. des vorderen Endbereiches des Flächengebildes 2 in den seitlichen Führungsprofilen 4 erfolgt durch Gleitsteine 9, 15, die in jeweils einer entsprechenden Kulissenführung 14 jedes Führungsprofiles 4 längs verschiebbar angeordnet sind. Die jeweilige Kulissenführung 14 bildet die Gleitbahn für jeden Gleitstein 9, 15 und damit für das Konturteil 3.

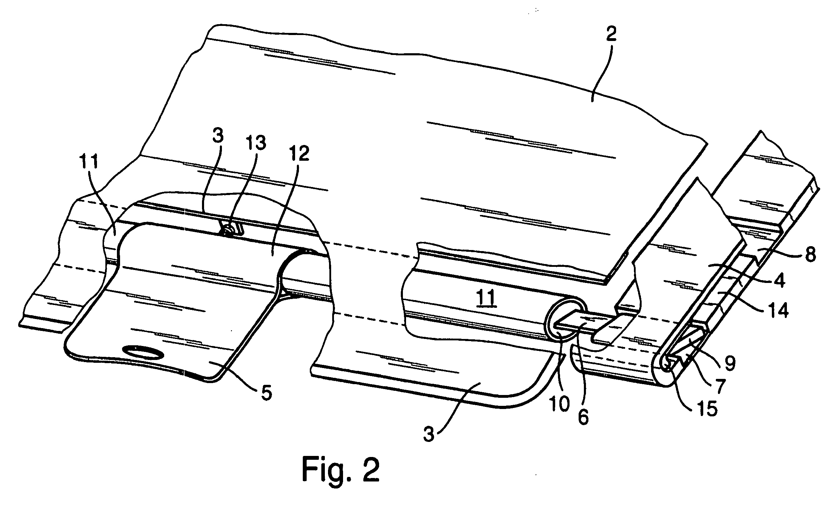

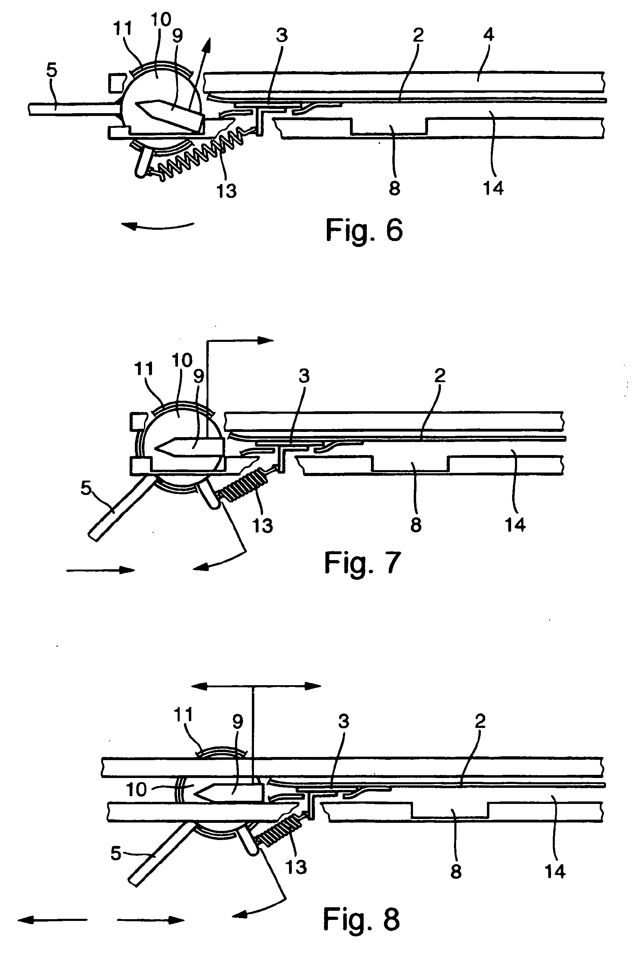

In jedem Führungsprofil 4 ist - synchronisiert auf gleicher Höhe - eine Raststelle 7 für die Arretierung des Flächengebildes 2 in einer ausgezogenen Funktionsposition vorgesehen. Die Raststelle 7 in jedem Führungsprofil 4 ist als quernutförmige Aussparung gestaltet. Die Gleitsteine 9, 15, mittels derer das Konturteil 3 und damit der vordere Endbereich des Flächengebildes 2, in den Führungsprofilen 4 geführt ist, sind durch einen gleitbeweglichen Abschnitt 15, der einstückig mit dem Konturteil 3 verbunden ist, einerseits und durch einen Rastkopf 9 andererseits gebildet. Die beiden gegenüberliegenden Rastköpfe 9 sind über eine gemeinsame Welle 10 miteinander verbunden, die sich über die gesamte Breite des Flächengebildes 2 erstreckt und die in entsprechend koaxialen Rohrabschnitten 11 des Konturteiles 3 gelagert ist. Die Welle 10 weist an ihren gegenüberliegenden Stirnenden 6 (Fig. 1 und 2) jeweils einen flachen, plattenartigen Fortsatz auf, der nach außen abragt und den jeweiligen Rastkopf 9 trägt. Fest mit der Welle 10 verbunden ist der in der Mitte angeordnete Betätigungsgriff 5, der somit zwischen den beiden Rohrabschnitten 11 des Konturteiles 3 angeordnet ist. Wie anhand der Figuren 6 bis 7 erkennbar ist, ist der Betätigungsgriff 5, insbesondere durch Verschweißung oder Verklebung, fest mit dem Mantel der Welle 10 verbunden. Auf Höhe des Betätigungsgriffes 5 greift an der Welle 10 eine Federanordnung in Form einer Schraubendruckfeder 13 an, die sich an einem nicht näher bezeichneten Fortsatz der Welle 10 einerseits und an einem ebenfalls nicht näher bezeichneten Stützwinkel des Konturteiles 3 andererseits abstützt. Die Schraubendruckfeder 13 übt auf die Welle 10 somit ein Drehmoment aus, das den Betätigungsgriff 5 in eine horizontale Ruheposition gemäß den Fig. 2 und 6 drückt und somit in diese Richtung vorspannt. Die Schraubendruckfeder 13 übt gemäß den Fig. 6 bis 8 somit auf die Welle 10 ein Drehmoment im Uhrzeigersinn aus.

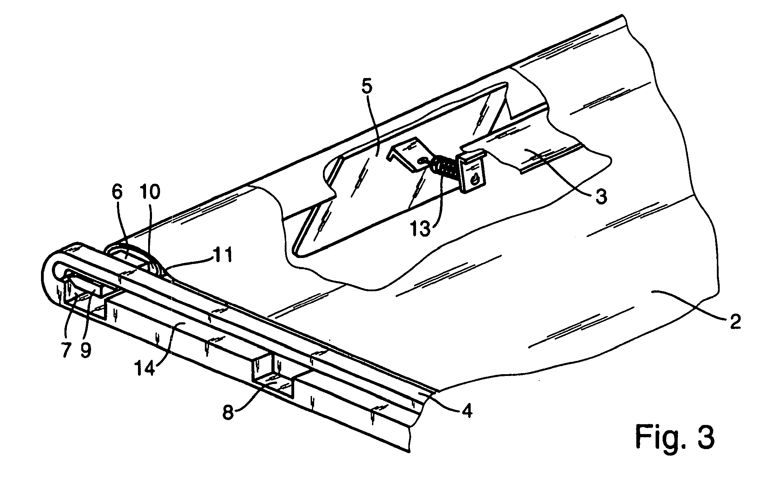

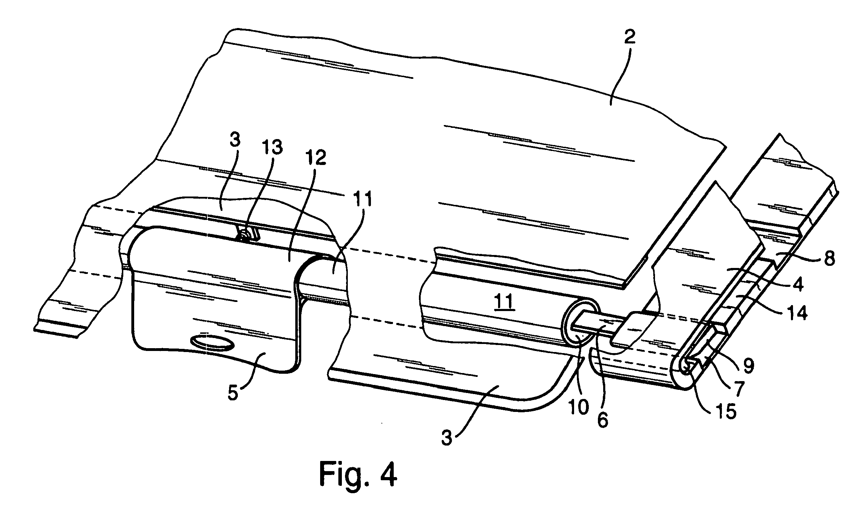

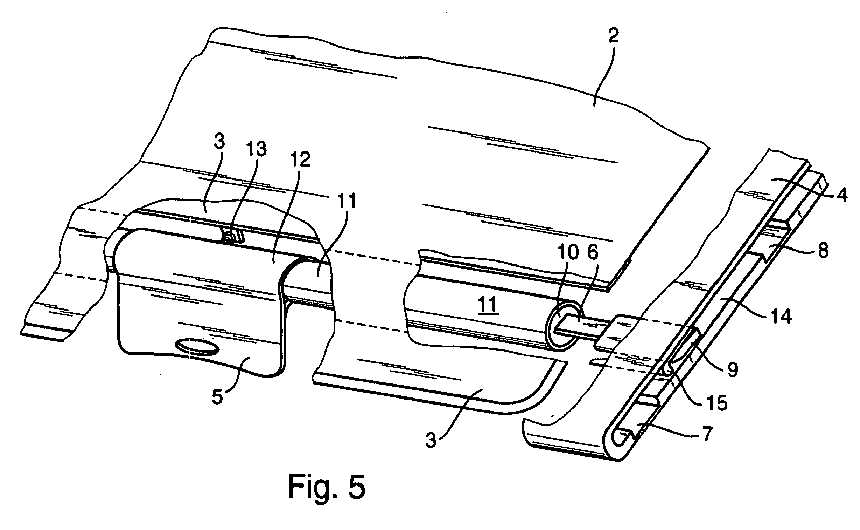

Wie anhand der Fig. 2 bis 8 erkennbar ist, sind die beiden Rastköpfe 9 relativ zu dem von der Welle 10 radial abragenden Betätigungsgriff 5 schräg gestellt. Die Schrägstellung ist derart gewählt, dass in der horizontalen Ausrichtung des Betätigungsgriffes 5 der Rastkopf 9 schräg nach vorne und nach unten ragt. In dieser Rastposition hintergreift er einen Rand der Raststelle 7, wie anhand der Fig. 2 und 6 erkennbar ist. Dadurch ist das Konturteil 3 und damit auch das Flächengebilde 2 in der ausgezogenen Funktionsposition durch die Kraft der Schraubendruckfeder 13 in den gegenüberliegenden Raststellen blockiert. Die auf das Flächengebilde 2 wirkende Rückholkraft der Wickelfeder verstärkt die formschlüssige Arretierung des Flächengebildes 2 in dieser Funktionsposition.

Um nun das Flächengebilde 2 aus der ausgezogenen Funktionsposition in eine Zwischenposition, beispielweise im Bereich der Raststellen 8, oder in die ganz eingezogene Ruheposition am Kassettengehäuse zurückzuführen, wird in einfacher Weise der Betätigungsgriff 5 nach unten gedrückt, wodurch sich die Welle 10 verdreht und die Rastköpfe 9 in Pfeilrichtung (Fig. 6) nach oben verschwenkt werden. Durch die Rückholkraft der Wickelfeder werden die Rastköpfe 9 in die Kulissenführung 14 jedes Führungsprofiles 4 eingezogen, sobald sie mit dieser Kulissenführung 14 fluchten (Fig. 7 und 8 sowie 3 bis 5). Das Nachuntenschwenken des Betätigungsgriffes 5 erfolgt gegen die Druckkraft der Schraubendruckfedern 13. Sobald daher eine weitere Zwischenposition, beispielsweise im Bereich der Raststelle 8, beim Einfahren des Flächengebildes 2 erreicht ist, drückt die Druckkraft der Schraubendruckfeder 13 die Rastköpfe 9 automatisch wieder im Uhrzeigersinn nach unten, so dass die Rastköpfe 9 an der Zwischenposition, nämlich in den Raststellen 8, einrasten und dort eine erneute Arretierung für eine weitere, nur teilweise ausgezogene Funktionsposition bewirken.

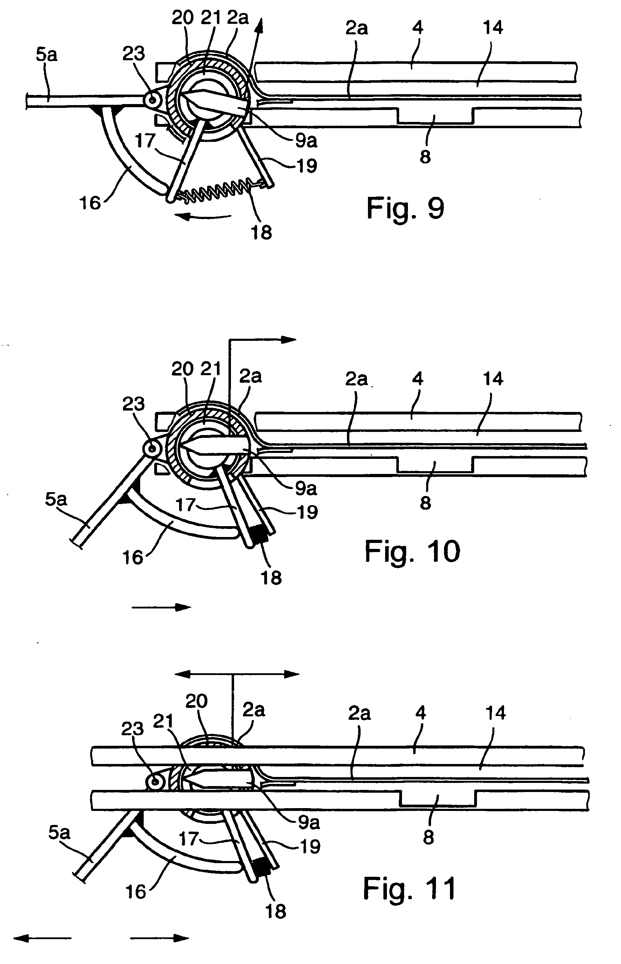

Beim Ausführungsbeispiel nach den Fig. 9 bis 11 entspricht die Abdeckvorrichtung im wesentlichen dem zuvor anhand der Fig. 1 bis 8 beschriebenen Ausführungsbeispiel, so dass nachfolgend lediglich auf die Unterschiede eingegangen wird. Jeder Rastkopf 9a ist starr mit einer Welle 21 verbunden, die in einem in dem Konturteil 3 (nicht dargestellt) stationären Lagerrohr 20 drehbar gelagert ist. Die Welle 21 ist mit einem nach unten durch eine entsprechende Aussparung des Lagerrohres 20 radial abragenden Fortsatz 17 versehen, an dem sich eine Schraubendruckfeder 18 abstützt. Die Schraubendruckfeder 18 stützt sich mit ihrem anderen Ende an einem Stützfortsatz 19 ab, der starr mit dem Lagerrohr 20 verbunden ist und ebenfalls schräg nach unten abragt. Das Lagerrohr 20 wird von einem entsprechenden Umschlagende des Flächengebildes 2a umgeben. An dem Lagerrohr 20 ist ein Lagerbock 23 angeformt, an dem der Betätigungsgriff 5a schwenkbeweglich gelagert ist. Der Betätigungsgriff 5a stützt sich mittels eines Übertragungsfingers 16 an dem Stützfortsatz 17 ab. Durch eine Schwenkbewegung des Betätigungsgriffes 5a nach unten wird der Übertragungsfinger 126 mitbewegt, wodurch der Stützfortsatz 17 (in der Darstellung nach den Fig. 9 bis 11) im Gegenuhrzeigersinn nach vorne geschwenkt wird. Dadurch gerät jeder Rastkopf 9a in die mit der Kulissenführung 14 fluchtende Lage, wodurch die Wickelfeder das Flächengebilde 2a einschließlich der Rastköpfe 9a in Richtung des Kassettengehäuses ziehen kann. Die Rückstellkraft der Schraubendruckfeder 18 bewirkt, dass der Rastkopf 9a in seine schräg gestellte Lage zurückgedreht wird, sobald ihm dazu durch die angepasste Kulissenführung 14 eine Möglichkeit gegeben wird. Dies ist der Fall bei der eine Zwischenposition darstellenden Raststelle 8. In gleicher Weise wie beim Ausführungsbeispiel nach den Fig. 2 bis 8 wird daher der Rastkopf 9a zwangsläufig nach unten gedrückt werden, sobald die Raststelle 8 erreicht ist.

Im Unterschied zu der Ausführung nach den Fig. 2 bis 8 ist der Betätigungsgriff 5a mit einer Art Freilauf versehen, indem er sich lediglich durch sein Eigengewicht im Zustand gemäß Fig. 11 an dem Stützfortsatz 17 mittels seines Übertragungsfingers 16 abstützt. Sobald daher auf den Betätigungsgriff 5a eine Gegenkraft, beispielsweise durch ein Gepäckstück oder einen Transportgegenstand, an den der Betätigungsgriff 5a beim Einziehen des Flächengebildes 2a anschlägt, einwirkt, weicht der Betätigungsgriff 5a nach oben aus.

Bei einem nicht dargestellten Ausführungsbeispiel der Erfindung wird eine Freilauffunktion des Betätigungsgriffes, die ein Ausweichen des Betätigungsgriffes beim Auftreffen auf ein Hindernis bewirkt, dadurch erzielt, dass der Betätigungsgriff entgegengesetzt zur Löserichtung über seine normale Ruhelage hinaus schwenkbeweglich gelagert ist, und dass dem Betätigungsgriff eine Rückstellfeder zugeordnet ist, die den Betätigungsgriff beim Auslenken entgegen der Löserichtung durch das Auftreffen auf ein Hindernis wieder in die Ausgangslage zurückstellt, sobald die Belastung durch das Hindernis weggenommen ist.

Bei einem weiteren Ausführungsbeispiel der Erfindung kann der Wickelwelle zusätzlich eine Dämpfungseinrichtung zugeordnet sein, durch die die Rückhol- und Aufrollbewegung des Flächengebildes, die durch die Rückholkraft der Wickelfeder erzielt wird, gebremst wird. Die Dämpfungs- und Bremswirkung kann sich über den gesamten Rückholweg oder lediglich über einen Schlussabschnitt kurz vor Erreichen der eingezogenen Endposition erstrecken.

## Patentansprüche

1. Abdeckvorrichtung für einen Laderaum eines Kraftfahrzeugs mit einem flexiblen Flächengebilde, das auf einer laderaumfest gelagerten Wickelwelle aufroll- oder ausziehbar gehalten ist, wobei der Wickelwelle eine Wickelfederanordnung zum Ausüben einer Aufrollkraft auf das Flächengebilde zugeordnet ist und wobei an einem vorderen Endbereich des Flächengebildes ein formstabiles Ausziehelement angeordnet ist, wobei das Flächengebilde (2, 2a) über seinen Ausziehweg im Laderaum (1) durch eine Führungsanordnung (4) geführt ist, wenigstens ein Arretiermittel (9, 9a) zum Blockieren des Flächengebildes (2, 2a) relativ zur Führungsanordnung (4) in wenigstens einer zumindest teilweise ausgezogenen Funktionsposition vorgesehen ist und dem Arretiermittel (7, 8, 9, 9a) eine manuell auslösbare Freigabevorrichtung (5, 10; 5a, 21) zugeordnet ist, mittels der die Arretierung des Flächengebildes (2, 2a) aufhebbar ist, und wobei als Führungsanordnung zwei auf gegenüberliegenden Seiten des Flächengebildes (2, 2a) im Laderaum horizontal angeordnete Führungsprofile (4) vorgesehen sind, **dadurch gekennzeichnet, dass** der vordere Endbereich des Flächengebildes (2, 2a) in jedem Führungsprofil durch einen Gleitstein (9, 15) geführt ist und dass jedem Gleitstein ein zwischen einer Blockierposition und einer Freigabeposition drehbeweglich gelagertes Rastfunktionselement (9, 9a) zugeordnet ist, das durch ein Federelement (13, 18) zur Blockierposition hin federbelastet ist, und an dem die Freigabevorrichtung zur zeitweisen Überführung des Rastfunktionselementes (9, 9a) in die Freigabeposition angreift.

2. Abdeckvorrichtung nach Anspruch 1, **dadurch gekennzeichnet, dass** das wenigstens eine Arretiermittel (9, 9a) auf Höhe des vorderen Endbereiches des Flächengebildes (2, 2a) angeordnet ist.

3. Abdeckvorrichtung nach Anspruch 1 oder 2, **dadurch gekennzeichnet, dass** die Freigabevorrichtung (5, 10; 5a, 21) im vorderen Endbereich des Flächengebildes (2, 2a) angeordnet ist.

4. Abdeckvorrichtung nach Anspruch 1, **dadurch gekennzeichnet, dass** die Rastfunktionselemente (9, 9a) starr mit einer gemeinsamen Welle (10, 21) verbunden sind, die in dem Ausziehelement (3) quer zur Ausziehrichtung des Flächengebildes drehbeweglich gelagert ist.

5. Abdeckvorrichtung nach Anspruch 4, **dadurch gekennzeichnet, dass** die Freigabevorrichtung einen koaxial zu der mit den Rastfunktionselementen (9, 9a) verbundenen Welle (10, 21) an dem Ausziehelement schwenkbeweglich gelagerten Betätigungsgriff (5, 5a) aufweist.

6. Abdeckvorrichtung nach Anspruch 5, **dadurch gekennzeichnet, dass** der Betätigungsgriff entgegengesetzt zu seiner Lösefunktion auslenkbar ist.

7. Abdeckvorrichtung nach Anspruch 6, **dadurch gekennzeichnet, dass** für die entgegengesetzte Auslenkbewegung eine Rückstellfeder an dem Betätigungsgriff angreift, die auf den Betätigungsgriff ein Drehmoment zur Lösefunktion hin ausübt.

8. Abdeckvorrichtung nach Anspruch 1, **dadurch gekennzeichnet, dass** eine Dämpfungseinrichtung vorgesehen ist, die die Einzieh/Aufrollbewegung des Flächengebildes bremst.

## Claims

1. Covering device for a loading space of a motor vehicle, the covering device having a flexible flat structure that is held on a winding roller, so that it can be wound onto or drawn out therefrom, fixedly mounted in the loading space, wherein associated with the winding roller is a coiled spring arrangement for exerting a rolling-up force on the flat structure and wherein at the leading end region of the flat structure there is disposed a dimensionally stable pull-out element, wherein the flat structure (2, 2a) is guided over its withdrawal path in the loading space (1) by a guiding arrangement (4), at least one locking means (9, 9a) is provided for blocking the flat structure (2, 2a) relative to the guiding arrangement (4) in at least one at least partially extended functional position, and a manually operable releasing device (5, 10; 5a, 21), by means of which the locking of the flat structure (2, 2a) can be terminated, is associated with the locking means (7, 8, 9, 9a), and wherein as guiding arrangement two guide profiles (4) arranged horizontally in the loading space are provided at opposite sides of the flat structure (2, 2a), **characterised in that** the leading end region of the flat structure (2, 2a) is guided in each guide profile by a slide block (9, 15) and **in that** associated with each slide block is a catch element (9, 9a), mounted so as to rotate between a blocking position and a release position, which is biased by a spring element (13, 18) towards the blocking position and which is subject to the action of the releasing device for temporary transfer of the catch element (9, 9a) into the release position.

2. Covering device according to claim 1, **characterised in that** the at least one locking means (9, 9a) is arranged at the level of the leading end region of the flat structure (2, 2a).

3. Covering device according to claim 1 or 2, **characterised in that** the releasing device (5, 10; 5a, 21) is arranged in the leading end region of the flat structure (2, 2a).

4. Covering device according to claim 1, **characterised in that** the catch elements (9, 9a) are rigidly connected to a common shaft (10, 21), which is rotatably mounted within the pull-out element (3), transversely to the direction of extension of the flat structure.

5. Covering device according to claim 4, **characterized in that** the releasing device comprises an operating handle (5, 5a) pivotally mounted on the pull-out element coaxially with respect to the shaft (10, 12) connected to the catch elements (9, 9a).

6. Covering device according to claim 5, **characterized in that** the operating handle is movable in a direction opposite to its releasing function.

7. Covering device according to claim 6, **characterized in that** for the opposing movement a return spring acts on the operating handle, which return spring exerts a torque on the operating handle towards the release function.

8. Covering device according to claim 1, **characterized in that** a damping device that retards the retracting/winding-up movement of the flat structure is provided.

## Revendications

1. Dispositif de masquage pour un compartiment à bagages d'un véhicule automobile, comportant un écran plan flexible, qui est fixé de manière à pouvoir être enroulé ou déroulé sur un arbre d'enroulement monté fixe dans le compartiment à bagages, sachant qu'un dispositif à ressort destiné à exercer une force d'enroulement sur l'écran plan est associé à l'arbre d'enroulement et un élément de déroulement à forme stable est disposé sur une zone d'extrémité avant de l'écran plan, l'écran plan (2, 2a) étant guidé sur sa trajectoire de déroulement dans le compartiment à bagages (1) par un système de guidage (4), sachant qu'au moins un moyen d'immobilisation (9, 9a) destiné à bloquer l'écran plan (2, 2a) par rapport au système de guidage (4) est prévu dans au moins une position fonctionnelle au moins partiellement déroulée et un dispositif de déblocage (5, 10 ; 5a, 21), apte à être déclenché manuellement et permettant de supprimer l'immobilisation de l'écran plan (2, 2a), est associé au moyen d'immobilisation (7, 8, 9, 9a), et sachant que deux profilés de guidage (4), montés horizontalement dans le compartiment à bagages sur deux côtés opposés de l'écran plan (2, 2a), sont prévus pour former le système de guidage, **caractérisé en ce que** la zone d'extrémité avant de l'écran plan (2, 2a) est guidée dans chaque profilé de guidage par un coulisseau (9, 15) et **en ce qu'**à chaque coulisseau est associé un élément fonctionnel d'immobilisation (9, 9a), monté mobile en rotation entre une position de blocage et une position de déblocage, lequel est sollicité vers la position de blocage par l'intermédiaire d'un ressort (13, 18) et contre lequel le dispositif de déblocage entre en prise pour amener temporairement l'élément fonctionnel d'immobilisation (9, 9a) dans la position de déblocage.

2. Dispositif de masquage selon la revendication 1, **caractérisé en ce qu'**au moins un moyen d'immobilisation (9, 9a) est disposé à hauteur de la zone d'extrémité de l'écran plan (2, 2a).

3. Dispositif de masquage selon la revendication 1 ou 2, **caractérisé en ce que** le dispositif de déblocage (5, 10 ; 5a, 21) est disposé dans la zone d'extrémité avant de l'écran plan (2, 2a).

4. Dispositif de masquage selon la revendication 1, **caractérisé en ce que** les éléments fonctionnels d'immobilisation (9, 9a) sont reliés de manière rigide à un arbre (10, 21) commun, qui est monté dans l'élément de déroulement (3) de manière mobile en rotation perpendiculairement à la direction de déroulement de l'écran plan.

5. Dispositif de masquage selon la revendication 4, **caractérisé en ce que** le dispositif de déblocage comporte une poignée d'actionnement (5, 5a), qui est montée pivotante sur l'élément de déroulement et coaxialement à l'arbre (10, 21) qui est relié aux éléments fonctionnels d'immobilisation (9, 9a).

6. Dispositif de masquage selon la revendication 5, **caractérisé en ce que** la poignée d'actionnement peut pivoter dans le sens opposé à sa fonction de déblocage.

7. Dispositif de masquage selon la revendication 6, **caractérisé en ce que**, pour le mouvement de pivotement en sens opposé, un ressort de rappel entre en contact avec la poignée d'actionnement, lequel exerce sur la poignée d'actionnement un couple de rotation pour la fonction de déblocage.

8. Dispositif de masquage selon la revendication 1, **caractérisé en ce qu'**il est prévu un dispositif d'amortissement qui freine le mouvement d'enroulement et de déroulement de l'écran plan.
